# EUROPEAN PATENT APPLICATION

(11) **EP 1 685 979 A1**
(43) Date of publication of application: **02.08.2006**
(21) Application number: 05425035.2
(22) Date of filing: 28.01.2005
(51) Int. Cl.: B60B 1/04

(54) **Bicycle wheel and spoke and hub body therefor**

(71) Applicant: CAMPAGNOLO S.R.L., 36100 Vicenza (VI) (IT)
(72) Inventor: Passarotto, Maurizio, 45100 Rovigo (IT); Meggiolan, Mario, 36051 Creazzo (Vicenza) (IT)
(74) Representative: Castiglia, Paolo

(57) **Abstract**

A bicycle wheel comprises a hub, a rim and a plurality of spokes (100) extending between said hub and said rim, wherein each spoke (100) of said plurality of spokes comprises an elongated body (110) extending along a respective longitudinal axis (X-X) and having, at a first end portion thereof, a head (120) for attachment to the hub. The wheel comprises, between the hub and the head (120) for attachment to the hub of the spokes (100), damping means (200) adapted to be deformed as a consequence of the occurrence, during travel, of a relative motion between hub and head (120) for attachment to the hub. A non-rigid coupling is thus achieved at the spoke-hub interface, wherein the damping means (200) absorb the stresses developed at the interface between hub and spoke when the aforementioned relative motion occurs, thus avoiding the occurrence of a relative motion with jerks, which is the cause of noisiness.

## Description

The present invention relates to a bicycle wheel. More specifically, the invention relates to a bicycle wheel having an improved spoke-hub coupling.

The invention also relates to a spoke and to a hub body for such a wheel and to a hub comprising the aforementioned hub body.

As known, a bicycle wheel comprises a plurality of spokes extending between the hub, which constitutes the central element of the wheel intended to be associated with the bicycle frame, and the rim on which the tire is mounted.

The hub in turn comprises a body on which the spokes of the bicycle are intended to be mounted, and a shaft, integrally and rotatably associated through bearings to the aforementioned body and extending longitudinally therein, intended to be connected, at its free ends, to the bicycle frame.

The spokes of bicycle wheels typically consists of substantially wire-shaped elements, generally made from metal like steel or aluminium or their alloys, provided with a first end portion for the attachment to the hub and a second end portion for the attachment to the rim. Typically, the end portion for attachment to the hub is shaped so as to define a widened head intended to be housed in suitable seats formed in the hub; the end portion for attachment to the rim, on the other hand, comprises a threaded zone to allow fastening to the rim and adjustment of the tension of the spoke through the help of a suitable nut or nipple.

In the assembly operations of a bicycle wheel it is necessary to take particular care in making hub-spoke and spoke-rim couplings that, in travel, are as stable as possible, so as to avoid the occurrence of relative movements that would cause a worsening of the efficiency of transfer of the drive torque between hub and rim and the deterioration of the various components (hub, spokes and rim) by laceration or wear, with consequent risks for the cyclist.

With particular reference to the hub-spoke coupling, in conventional wheels the stability of such a coupling is ensured by suitably designing the geometry of the heads of the spokes for attachment to the hub and of the respective housing seats formed in the hub and by suitably adjusting the tension of the spoke associated with the hub. Therefore, a rigid coupling with high contact friction between the surface of the head for attachment to the hub of the spokes and the surface of the respective housing seat formed in the hub is achieved.

Despite the high contact friction, it is still possible that, in travel, small relative displacements occur at the interface between head for attachment to the hub of the spokes and respective housing seat formed in the hub; the occurrence and the extent of such relative displacements depends upon the particular geometry of the head for attachment to the hub of the spokes and of the respective housing seat formed in the hub, upon the material from which the spokes and hub are formed and upon the continuous adjustments and/or stabilisation that inevitably occur during travel at the interface between the head for attachment to the hub and the respective housing seat.

For example, the Applicant has noticed the occurrence of small relative displacements in the circumferential direction between the head for attachment to the hub of the spokes and the respective housing seat formed in the hub in the case of metal spokes with rounded heads for attachment to the hub and housing seats for such heads of matching shape.

The Applicant has found that such small relative displacements cause noisiness, which obviously constitutes a disturbance for cyclists. Such noisiness is essentially linked to the fact that, precisely due to the high contact friction between heads for attachment to the hub and relative housing seats, the relative displacements take place with jerks (i.e. in a non-continuous manner), indeed being necessary to firstly overcome the friction threshold of first detachment between the contacting surfaces of the head for attachment to the hub and the respective housing seat.

The Applicant has also noticed that such noisiness is accentuated in the case of metal contact surfaces.

The Applicant has therefore considered the problem of eliminating, or at least noticeably reducing, the noisiness generated at the spoke-hub coupling when small relative displacements between such components occur during travel.

Therefore, in a first aspect thereof, the present invention relates to a bicycle wheel, comprising:
- a hub;
- a rim;
- a plurality of spokes extending between said hub and said rim, each spoke of said plurality of spokes comprising an elongated body extending along a respective longitudinal axis X-X and having, at a first end portion thereof, a head for attachment to the hub;
characterised in that it comprises, between said hub and said head for attachment to the hub, damping means adapted to be deformed as a consequence of the occurrence, during travel, of a relative motion between said hub and said head for attachment to the hub.

Throughout the present application and in the subsequent claims, the expression "damping means" is used to indicate any means capable of deforming when stressed, irrespective of whether such a deformation is then held or released once the stressing has ceased. The practical effect of such damping means, when arranged between two different components, is therefore, in addition to prevent direct contact of the two components, to partially or totally absorb the stresses generated by a component avoiding the direct transfer thereof to the other component.

Advantageously, the interposition of damping means as defined above between the head for attachment to the hub of the spokes and the hub of a bicycle wheel thus allows an non-direct spoke-hub coupling to be achieved in the wheel, in which the stresses developed at the interface between hub and spoke when small relative displacements between the aforementioned components occur are partially or totally absorbed by the damping means through deformation thereof, thus avoiding such stresses being transferred as such from one component to the other. In other words a non-rigid spoke-hub coupling is achieved in which the stresses at the spoke-hub interface are attenuated, if not actually completely absorbed, by the damping means; in this way the generation of a relative motion with jerks is avoided which, as stated above, is the cause of noisiness.

In a first preferred embodiment of the wheel of the present invention, the damping means are associated with the head for attachment to the hub of the spokes. In particular, such damping means can be applied to the head for attachment to the hub through a deposition treatment of a product that is initially in liquid/paste state and that is then left to solidify on the head for attachment to the hub. Alternatively, the damping means can be applied to the head for attachment to the hub through the interposition of conventional adhesive means, such as adhesives based upon silicon, acrylic, epoxy, etc.

In a further embodiment of the wheel of the present invention, the damping means are associated with the hub at suitable housing seats for the heads for attachment to the hub of the spokes. Also in this case, such damping means can be applied on said seats through a deposition treatment of a product that is initially in liquid/paste state and that is then left to solidify on the surface of the seats or, alternatively, through the interposition of conventional adhesive means, like those mentioned above.

Irrespective of whether the damping means are applied on the heads for attachment to the hub of the spokes or on the housing seats for such heads suitably provided in the hub, the use of a deposition treatment has the advantage of being able to be automated at the industrial level, whereas the use of adhesive means has the advantage of being possible to start from a film of predetermined thickness.

Preferably, irrespective of the method of application and the specific positioning of the damping means, such damping means comprise a layer of plastic material.

Preferably, a plastic material having high elongation at break is used, for example a plastic material having an elongation at break of between about 100% and about 500%. More preferably, the plastic material used is selected from the group consisting of: polyester, polytetrafluoroethylene, polyethylene, polyurethane and vinyl.

In the present invention, it is also foreseen the use of conventional elastic materials.

In general, it is preferred to use materials having high characteristics of resistance to wear, laceration, to the aggressive action of lubricants and/or detergents and that ensure a high stability through time faced with daily/seasonal heat cycles.

Preferably, the layer of material (plastic or elastic) that constitutes the damping means of the present invention has a predetermined thickness, more preferably of between about 0.05 mm and about 0.3 mm.

In a specific embodiment of the wheel of the present invention, the layer of material (plastic or elastic) that constitutes the damping means comprises, incorporated inside of it, a reinforcement fabric in order to increase the resistance to laceration and wear of such a layer. Such a fabric can, for example, be made from fibreglass or whatever other suitable material having high characteristics of resistance to laceration and wear.

In the preferred embodiment of the wheel of the present invention, the hub and the spokes are made from metal material. In such a case, the provision of the damping means between the head for attachment to the hub of the spokes and the respective housing seats formed in the hub is particularly advantageous since it allows to prevent a direct metal-metal coupling, which, being a rigid coupling with a high friction coefficient, is the cause of a high degree of noisiness.

In an alternative embodiment, the hub and/or the spokes are made from composite materials based upon structural fibres incorporated in a polymeric material, like for example carbon fibres incorporated in a matrix of thermosetting resin.

Like all conventional spokes, the elongated body of the spokes of the wheel of the present invention comprises, on the opposite side to the head for attachment to the hub, a second end portion for attachment to the rim and, between the head for attachment to the hub and said second end portion, an intermediate portion.

In the preferred embodiment of the wheel of the present invention, the head for attachment to the hub of the spokes is gradually joined along the aforementioned longitudinal axis X-X to the aforementioned intermediate portion of the spoke body. In particular, the head for attachment to the hub is flattened along a direction Z perpendicular to the longitudinal axis X-X and comprises a pair of substantially flat opposite front surfaces and a pair of opposite side surfaces, and the hub comprises an annular front surface on which a plurality of seats are formed for housing the aforementioned heads for attachment to the hub, each seat of said plurality of seats comprising a substantially flat front surface that operates in abutment against a front surface of said pair of opposite front surfaces of said head for attachment to the hub and a pair of opposite side surfaces that operate in abutment against said opposite side surfaces of said head for attachment to the hub, wherein said side surfaces of said seats have a shape matching that of the side surfaces of said heads for attachment to the hub. In such a preferred embodiment, the damping means are arranged between the aforementioned opposite side surfaces of the seats of the hub and the corresponding opposite side surfaces of the heads for attachment to the hub of the spoke. The direct contact between the side surfaces of the head for attachment to the hub of the spoke and the respective housing seat formed in the hub is thus prevented; the action of the damping means is therefore applied each time a relative displacement occurs in the circumferential direction between hub and spoke.

In a second aspect thereof, the present invention relates to a spoke for a bicycle wheel, comprising an elongated body extending along a longitudinal axis X-X and having, at a first end portion thereof, a head for attachment to a hub, characterised in that it comprises damping means associated with said head for attachment to the hub, said damping means being adapted to be deformed as a consequence of the occurrence, during travel, of a relative motion between said head for attachment to the hub and said hub.

Advantageously, such a type of spoke can be used in a bicycle wheel of the type described above and therefore allows the advantages aforementioned with reference to the wheel of the present invention to be achieved.

Such a spoke can have all of the preferred and/or optional characteristics described above with reference to the embodiment of the wheel of the present invention in which the damping means are associated with the head for attachment to the hub of the spokes. Moreover, the damping means used in such a spoke can have all of the preferred and optional characteristics described above with reference to the wheel of the present invention.

Preferably, the spoke discussed above, if used in the wheel of the present invention, is adapted to be associated with a hub in which the housing seats of the heads for attachment to the hub of the spokes are without damping means. However, it is foreseen the possibility of using the spoke discussed above together with a hub in which the housing seats of the heads for attachment to the hub of the spokes are also provided with damping means, such as a hub having a hub body of the type described below.

In a third aspect thereof, the present invention relates to a hub body for a bicycle wheel, comprising a substantially tubular body extending along a longitudinal axis A-A and provided with a plurality of seats for housing corresponding heads for attachment to the hub of respective spokes, characterised in that it comprises damping means associated with said seats, said damping means being adapted to be deformed as a consequence of the occurrence, during travel, of a relative motion between said hub body and said head for attachment to the hub.

Advantageously, such a hub body can be used in a bicycle wheel of the type described above and therefore allows the advantages aforementioned with reference to the wheel of the present invention to be achieved.

Such a hub body can have all of the preferred and/or optional characteristics described above with reference to the embodiment of the wheel of the present invention in which the damping means are associated with the hub of the wheel. Moreover, the damping means used in such a hub body can have all of the preferred and optional characteristics described above with reference to the wheel of the present invention.

Preferably, the hub body discussed above, if used in the wheel of the present invention, is adapted to be associated with spokes without damping means. However, it is foreseen the possibility of using the hub discussed above with spokes also provided with damping means, like those described above.

In a fourth aspect thereof, the present invention relates to a hub for a bicycle wheel, comprising:
- a substantially tubular hub body extending along a longitudinal axis A-A and provided with a plurality of seats for housing corresponding heads for attachment to the hub of respective spokes;
- a shaft extending along said longitudinal axis A-A inside said hub body and adapted to be associated with a bicycle frame;
characterised in that said hub body is a hub body of the type described above.

Advantageously, such a hub, comprising a hub body of the type discussed above, allows the aforementioned advantages to be achieved.

Further characteristics and advantages of the present invention shall become clearer from the following detailed description of a preferred embodiment thereof, made with reference to the attached drawings. In such drawings,
- figure 1 is a schematic partially exploded perspective view of a hub body and of a spoke of an embodiment of the bicycle wheel of the present invention in assembly configuration;
- figure 2 is a schematic partially exploded perspective view of the hub body and of a plurality of spokes of the type illustrated in figure 1 in assembled configuration;
- figure 3 is a schematic enlarged perspective view of a detail of figure 2.

In such figures, an example of a hub body and a spoke for a bicycle wheel in accordance with the present invention are respectively indicated with 10 and 100. The hub body 10 illustrated is of the type described in European patent application n° 04425509 to the same Applicant, the content of which is herewith incorporated by reference, whereas the spoke 100 illustrated is of the type described in European patent application n° 04425046 to the same Applicant, the content of which is also herewith incorporated by reference.

Although the present description shall be made with reference to the specific embodiment of the hub body and of the spoke illustrated in the attached figures and described in the aforementioned patent applications, the man skilled in the art shall understand that what has been said with specific reference to the hub-spoke coupling has immediate and analogous application in hub bodies and spokes of different shapes and types.

The hub body 10 illustrated in the attached figures is adapted to house a longitudinal shaft (not illustrated) inside it to form a hub of a bicycle wheel. Such a longitudinal shaft is in turn adapted to be associated, at the opposite free ends, with a bicycle frame (not illustrated).

Such a hub is adapted to be associated, through a plurality of spokes 100, with a rim of a bicycle wheel (not illustrated).

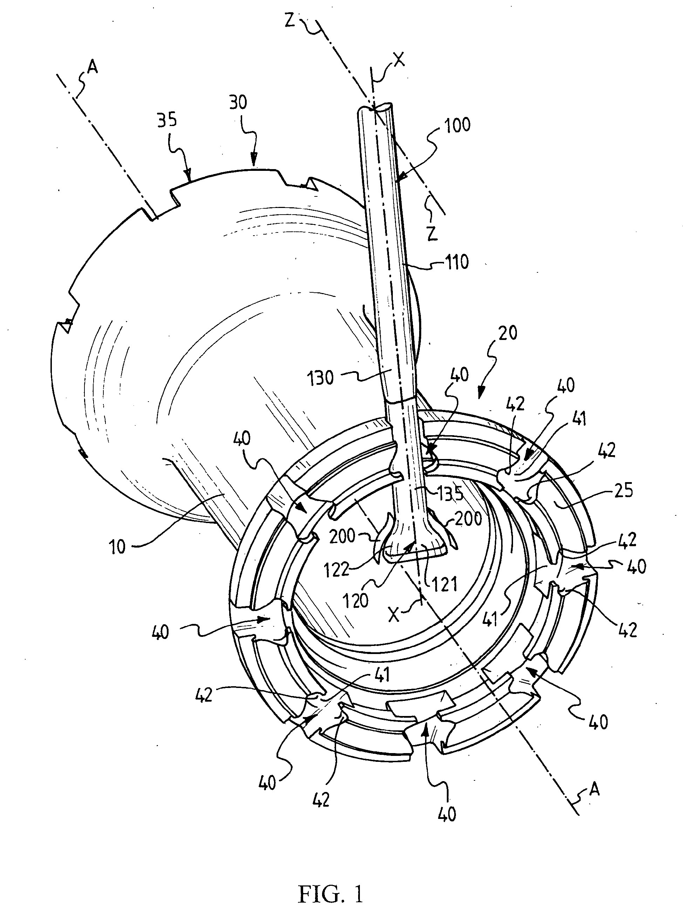

In the specific example illustrated in the attached figures, the hub body 10 comprises a substantially tubular body, made for example from metal material, and extending along a longitudinal axis A-A. The hub body 10 is provided with a pair of flanged opposite end portions 20, 30 having respective annular front surfaces 25, 35 on which a plurality of seats are formed, all indicated with 40 (figure 1).

The spoke 100 comprises an elongated body 110, also made for example from metal material, like steel or aluminium or their alloys (preferably aluminium alloy), extending along a longitudinal axis X-X.

The hub body 10 and/or the spokes 100 can, however, be made from composite materials based upon structural fibres incorporated in a polymeric material, like for example carbon fibres incorporated in a matrix of thermosetting resin.

The body 110 of the spoke 100 comprises a first end portion defining a head 120 for attachment to the hub, a second threaded end portion (not illustrated) defining a zone for attachment to the rim and an intermediate portion 130. Such an intermediate portion 130 in turn comprises a portion 135 flattened in a transversal direction Z perpendicular to the longitudinal axis X-X of the spoke 100 and extending along said longitudinal axis X-X up to the head 120 for attachment to the hub, which is also flattened in the transversal direction Z and is joined gradually, along the longitudinal axis X-X, to the flattened portion 135 of the elongated body 110.

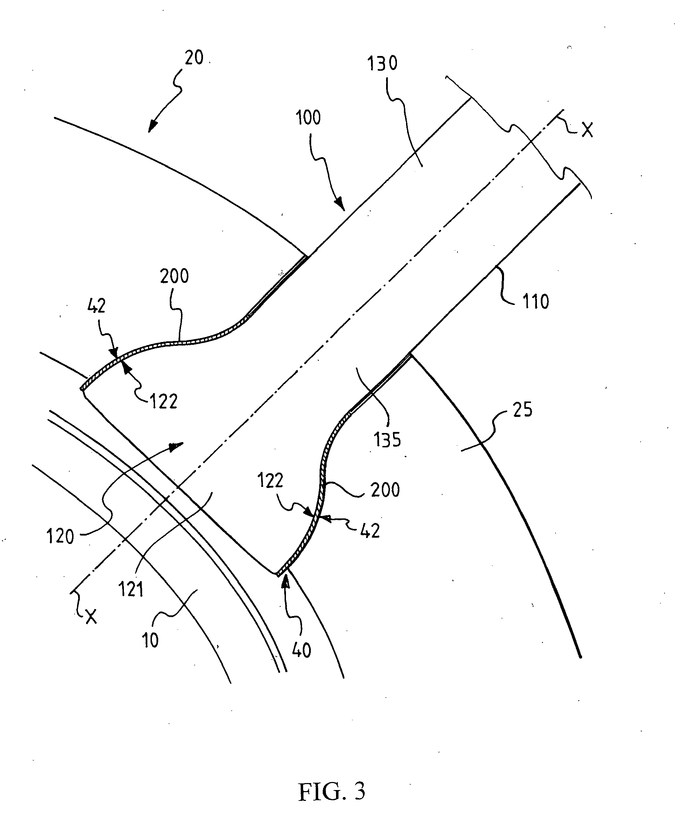

The head 120 for attachment to the hub of the spoke 100 comprises, in particular, a pair of substantially flat opposite front surfaces 121 (only one of which can be seen in the attached figures) and a pair of opposite side surfaces 122 (figures 1 and 3).

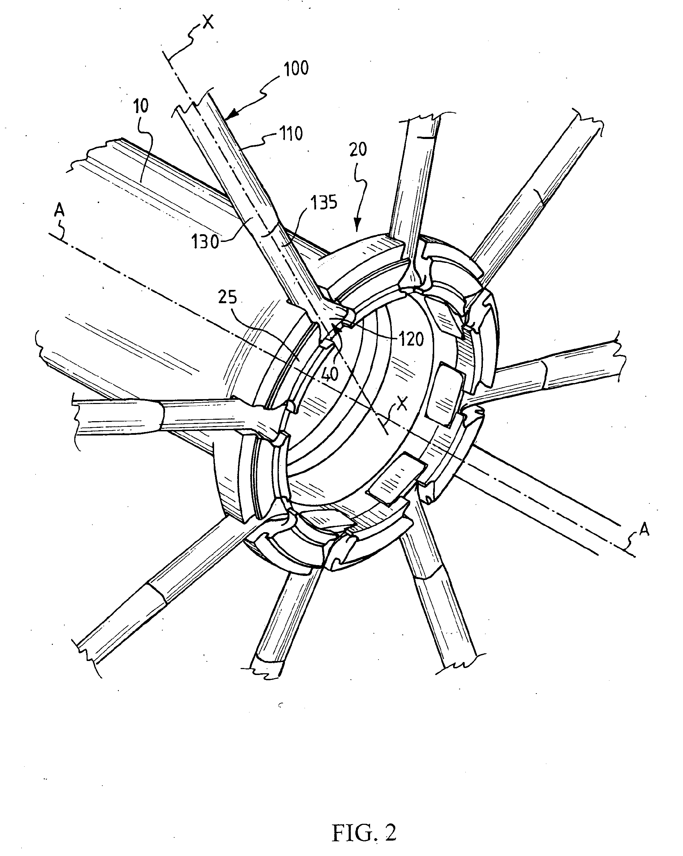

The seats 40 formed in the hub 10 are suitable for each housing a head 120 for attachment to the hub of a respective spoke 100, as illustrated in figure 2 and 3.

Each seat 40 of the hub 10 comprises, in particular, a substantially flat front surface 41 that operates in abutment against one of the front surfaces 121 of the head 120 for attachment to the hub of the spoke 100 and a pair of opposite side surfaces 42 that operate in abutment against the side surfaces 122 of the head 120 for attachment to the hub (as illustrated in figure 1 at just some of the seats 40 and only partially in figure 3) once the spoke 100 mounted on the hub body 10 is suitably tensioned.

The side surfaces 42 of the seats 40 have a shape matching that of the side surfaces 122 of the heads 120 for attachment to the hub.

For the sake of simplicity of illustration and of reading of the figures, the reference numerals, although identical for all of the seats 40 and for all of the spokes 100 illustrated, have been shown in figures 1 and 2 only at some of the seats 40 and at some of the spokes 100.

In accordance with the invention, between the seat 40 and the head 120 for attachment to the hub suitable damping means 200 are arranged (visible in figures 1 and 3) which are adapted to be deformed as a consequence of the occurrence, during travel, of a relative motion between the hub body 10 and the head 120 for attachment to the hub of the spokes 100. In the specific example embodiment illustrated in the attached figures, see in particular figure 1 and figure 3, the damping means 200 are arranged between the side surfaces 42 of the seats 40 and the side surfaces 122 of the heads 120 for attachment to the hub, preventing the direct contact of such surfaces and exerting the damping and/or absorption action whenever a relative displacement occurs in the circumferential direction between hub and spoke.

The damping means 200 can be associated with the head 120 for attachment to the hub of the spokes 100 or with the seats 40 of the hub body 10. Irrespective of where they are arranged, they can be applied through a deposition treatment of a product that is initially in liquid/paste state and that is then left to solidify on the head 120 for attachment to the hub or on the seat 40 of the hub body 10, or else they can be applied through the interposition of conventional adhesive means (not illustrated), such as adhesives based upon silicon, acrylic, epoxy, etc. The presence of an adhesive is solely for the purpose of holding the damping means 200 in position in the steps of application thereof onto the heads 120 for attachment to the hub of the spokes 100 or onto the seats 40 formed in the hub body 10.

The damping means 200 comprise a layer of plastic material having high elongation at break, preferably a plastic material having an elongation at break of between about 100% and about 500%. Examples of plastic materials that can be used are: polyester, polytetrafluoroethylene, polyethylene, polyurethane and vinyl.

However, the use of conventional elastic means is also foreseen, as an alternative.

In general, it is preferable to use materials having high characteristics of resistance to wear, laceration, to the aggressive action of lubricants and/or detergents and that ensure a high stability through time faced with daily/seasonal heat cycles.

Preferably, the layer of material (plastic or elastic) that constitutes the damping means of the present invention has a thickness of between about 0.05 mm and about 0.3 mm.

In a specific embodiment of the wheel of the present invention, the layer of material (plastic or elastic) that constitutes the damping means comprises, incorporated inside of it, a reinforcement fabric in order to increase the resistance to laceration and wear. Such a fabric can, for example, be made from fibreglass or another suitable material having high characteristics of resistance to laceration and wear.

During travel, whenever a relative displacement occurs between head 120 for attachment to the hub and hub body 10 (in the specific example illustrated in the attached figures, a relative displacement in the circumferential direction), the damping means 200 are deformed absorbing the stresses developed at the interface between hub and spoke, thus avoiding the generation of a relative motion in jerks, which is the cause of noisiness.

## Claims

1. Bicycle wheel, comprising:
- a hub;
- a rim;
- a plurality of spokes (100) extending between said hub and said rim, each spoke (100) of said plurality of spokes comprising an elongated body (110) extending along a respective longitudinal axis (X-X) and having, at a first end portion thereof, a head (120) for attachment to the hub;
**characterised in that** it comprises, between said hub and said head (120) for attachment to the hub, damping means (200) adapted to be deformed as a consequence of the occurrence, during travel, of a relative motion between said hub and said head (120) for attachment to the hub.

2. Bicycle wheel according to claim 1, wherein said damping means (200) are associated with said head (120) for attachment to the hub.

3. Bicycle wheel according to claim 2, wherein said damping means (200) are applied onto said head (120) for attachment to the hub through a deposition treatment.

4. Bicycle wheel according to claim 2, wherein said damping means (200) are applied onto said head (120) for attachment to the hub through the interposition of adhesive means.

5. Bicycle wheel according to claim 1, wherein said damping means (200) are associated with said hub at suitable housing seats (40) for said heads (120) for attachment to the hub of the spokes (100).

6. Bicycle wheel according to claim 5, wherein said damping means (200) are applied onto said seats (40) through a deposition treatment.

7. Bicycle wheel according to claim 5, wherein said damping means (200) are applied onto said seats (40) through the interposition of adhesive means.

8. Bicycle wheel according to any one of the previous claims, wherein said damping means (200) comprise a layer of plastic material.

9. Bicycle wheel according to claim 8, wherein said plastic material is a plastic material having high elongation at break.

10. Bicycle wheel according to claim 9, wherein said elongation at break is between about 100% and about 500%.

11. Bicycle wheel according to any one of claims from 8 to 10, wherein said plastic material is selected from the group consisting of: polyester, polytetrafluoroethylene, polyethylene, polyurethane and vinyl.

12. Bicycle wheel according to any one of claims from 1 to 7, wherein said damping means (200) comprise a layer of elastic material.

13. Bicycle wheel according to any one of claims from 8 to 12, wherein said layer has a thickness of between about 0.05 mm and about 0.3 mm.

14. Bicycle wheel according to any one of claims from 8 to 13, wherein said layer comprises, incorporated inside of it, a reinforcement fabric.

15. Bicycle wheel according to claim 14, wherein said reinforcement fabric is made from fibreglass.

16. Bicycle wheel according to any one of the previous claims, wherein said hub and said elongated body (110) of said spokes (100) are made from metal material.

17. Bicycle wheel according to any one of the previous claims, wherein said elongated body (110) of said spokes (100) comprises a second end portion for attachment to the rim and an intermediate portion (130) between said head (120) for attachment to the hub and said second end portion, wherein said head (120) for attachment to the hub is joined gradually along said longitudinal axis (X-X) to said intermediate portion (130).

18. Bicycle wheel according to any one of the previous claims, wherein said head (120) for attachment to the hub is flattened along a direction Z perpendicular to said longitudinal axis (X-X) and comprises a pair of opposite substantially flat front surfaces (121) and a pair of opposite side surfaces (122), and wherein said hub comprises a body (10) having an annular front surface (25, 35) on which a plurality of seats (40) are formed for housing said heads (120) for attachment to the hub, each seat (40) of said plurality of seats comprising a substantially flat front surface (41) that operates in abutment against a front surface (121) of said pair of opposite front surfaces of said head (120) for attachment to the hub and a pair of opposite side surfaces (42) that operate in abutment against said opposite side surfaces (122) of said head (120) for attachment to the hub, wherein said side surfaces (42) of said seats (40) have a shape matching that of the side surfaces (122) of said heads (120) for attachment to the hub and wherein said damping means (200) are arranged between said opposite side surfaces (42) of said seats and said opposite side surfaces (122) of said heads (120) for attachment to the hub.

19. Spoke (100) for a bicycle wheel, comprising an elongated body (110) extending along a longitudinal axis (X-X) and having, at a first end portion thereof, a head (120) for attachment to a hub, **characterised in that** it comprises damping means (200) associated with said head (120) for attachment to the hub, said damping means (200) being adapted to be deformed as a consequence of the occurrence, during travel, of a relative motion between said head (120) for attachment to the hub and said hub.

20. Spoke (100) according to claim 19, wherein said damping means (200) are applied onto said head (120) for attachment to the hub through a deposition treatment.

21. Spoke (100) according to claim 19, wherein said damping means (200) are applied onto said head (120) for attachment to the hub through the interposition of adhesive means.

22. Spoke (100) according to any one of claims from 19 to 21, wherein said damping means (200) comprise a layer of plastic material.

23. Spoke (100) according to claim 22, wherein said plastic material is a plastic material having high elongation at break.

24. Spoke (100) according to claim 23, wherein said elongation at break is between about 100% and about 500%.

25. Spoke (100) according to any one of claims from 22 to 24, wherein said plastic material is selected from the group consisting of: polyester, polytetrafluoroethylene, polyethylene, polyurethane and vinyl.

26. Spoke (100) according to any one of claims from 19 to 21, wherein said damping means (200) comprise a layer of elastic material.

27. Spoke (100) according to any one of claims from 22 to 26, wherein said layer has a thickness of between about 0.05 mm and about 0.3 mm.

28. Spoke (100) according to any one of claims from 22 to 27, wherein said layer comprises, incorporated inside of it, a reinforcement fabric.

29. Spoke (100) according to claim 28, wherein said reinforcement fabric is made from fibreglass.

30. Spoke (100) according to any one of claims from 19 to 29, wherein said elongated body (110) is made from metal material.

31. Spoke (100) according to any one of claims from 19 to 30, wherein said elongated body (110) comprises a second end portion for attachment to the rim and an intermediate portion (130) between said head (120) for attachment to the hub and said second end portion for attachment to the rim, wherein said head (120) for attachment to the hub is joined gradually along said longitudinal axis (X-X) to said intermediate portion (130).

32. Spoke (100) according to any one of claims from 19 to 31, wherein said head (120) for attachment to the hub is flattened along a direction Z perpendicular to said longitudinal axis (X-X) and comprises a pair of opposite substantially flat front surfaces (121) and a pair of opposite side surfaces (122), wherein said damping means (200) are associated with said opposite side surfaces (122).

33. Hub body for a bicycle wheel, comprising a substantially tubular body (10) extending along a longitudinal axis (A-A) and provided with a plurality of seats (40) for housing corresponding heads (120) for attachment to the hub of respective spokes (100),
**characterised in that** it comprises damping means (200) associated with said seats (40), said damping means (200) being adapted to be deformed as a consequence of the occurrence, during travel, of a relative motion between said hub body (10) and said head (120) for attachment to the hub.

34. Hub body according to claim 33, wherein said damping means (200) are applied onto said seats (40) through a deposition treatment.

35. Hub body according to claim 33, wherein said damping means (200) are applied onto said seats (40) through the interposition of adhesive means.

36. Hub body according to any one of claims from 33 to 35, wherein said damping means (200) comprise a layer of plastic material.

37. Hub body according to claim 36, wherein said plastic material is a plastic material having high elongation at break.

38. Hub body according to claim 37, wherein said elongation at break is between about 100% and about 500%.

39. Hub body according to any one of claims from 36 to 38, wherein said plastic material is selected from the group consisting of: polyester, polytetrafluoroethylene, polyethylene, polyurethane and vinyl.

40. Hub body according to any one of claims from 33 to 35, wherein said damping means (200) comprise a layer of elastic material.

41. Hub body according to any one of claims from 36 to 40, wherein said layer has a thickness of between about 0.05 mm and about 0.3 mm.

42. Hub body according to any one of claims from 36 to 41, wherein said layer comprises, incorporated inside it, a reinforcement fabric.

43. Hub body according to claim 42, wherein said reinforcement fabric is made from fibreglass.

44. Hub body according to any one of claims from 33 to 43, wherein said body (10) is made from metal material.

45. Hub body according to any one of claims from 33 to 44, wherein said seats (40) are formed on a respective annular front surface (25, 35) of said body (10) and comprise a substantially flat front surface (41) and a pair of opposite side surfaces (42), wherein said damping means (200) are associated with said opposite side surfaces (42).

46. Hub for a bicycle wheel, comprising:
- a substantially tubular hub body (10) extending along a longitudinal axis (A-A) and provided with a plurality of seats (40) for housing corresponding heads (120) for attachment to the hub of respective spokes (100);
- a shaft extending along said longitudinal axis (A-A) inside said hub body (100) and adapted to be associated with a bicycle frame;
**characterised in that** said hub body (10) is a hub body according to any one of claims from 33 to 45.
